# FASCICULE DE BREVET EUROPEEN

(11) **EP 2 517 347 B1**
(45) Date de publication et mention de la délivrance du brevet: **22.04.2015**
(21) Numéro de dépôt: 10796030.4
(22) Date de dépôt: 20.12.2010
(51) Int. Cl.: H02M 7/48, H02H 7/122

(54) **ONDULEUR RECONFIGURABLE, A TOLERANCE DE PANNES, POUR L'ALIMENTATION D'UN MOTEUR POLYPHASE SYNCHRONE A AIMANTS PERMANENTS, ET ENSEMBLE DESDITS ONDULEUR ET MOTEUR**
NEUKONFIGURIERBARER WANDLER MIT FEHLERTOLERANZ FÜR DEN BETRIEB EINES SYNCHRONEN MEHRPHASENMOTORS MIT PERMANENTMAGNETEN UND ANORDNUNG MIT DIESEM WANDLER UND MOTOR
RECONFIGURABLE INVERTER HAVING FAILURE TOLERANCE FOR POWERING A SYNCHRONOUS POLY-PHASE MOTOR HAVING PERMANENT MAGNETS, AND ASSEMBLY INCLUDING SAID INVERTER AND MOTOR

(30) Priorité: 22.12.2009 FR 0959367
(43) Date de publication de la demande: 31.10.2012
(73) Titulaire: Airbus Defence and Space SAS, 78130 Les Mureaux (FR)
(72) Inventeur: GUITARD, Jérémy, F-75018 Paris (FR); RICHARD, Frédéric, F-75013 Paris (FR); POL, Xavier, F-31300 Toulouse (FR)
(74) Mandataire: Ilgart, Jean-Christophe
(86) Numéro de dépôt international: PCT/EP2010/070256
(87) Numéro de publication internationale: WO 2011/076742

(56) Documents cités:
- FR-A1- 2 892 243
- US-A- 5 491 622
- Jérôme Mavier: "Convertisseur génériques à tolérance de panne, applications pour le domaine aéronautique", , 22 mars 2007 (2007-03-22), pages 1-195, XP002594900, Toulouse Extrait de l'Internet: URL:http://ethesis.inp-toulouse.fr/archive /00000534/01/mavier.pdf [extrait le 2010-07-29] cité dans la demande
- RICHARDEAU F ET AL: "Fault-tolerant inverter for on-board aircraft EHA", EUROPEAN CONFERENCE ON POWER ELECTRONICS AND APPLICATIONS, 2007, XP002594901, DOI: 10.1109/EPE.2007.4417537

## Description

### DOMAINE TECHNIQUE

La présente invention concerne un onduleur reconfigurable, à tolérance de pannes (en anglais, *reconfigurable, fault-tolerant inverter*), pour l'alimentation d'un moteur polyphasé (en particulier triphasé) synchrone à aimants permanents (en anglais, *multi-phase (in particular three-phase) permanent-magnet synchronous motor*), ainsi qu'un ensemble desdits onduleur et moteur.

Elle s'applique notamment au domaine aérospatial et plus particulièrement au domaine spatial.

Depuis plus de deux décennies, l'électricité prend une importance croissante au sein des équipements spatiaux, aéronautiques, automobiles et ferroviaires. En effet, le développement de moyens de déplacement spatiaux, aériens et terrestres de plus en plus « électriques » a montré un fort potentiel d'optimisation par rapport à l'emploi de systèmes classiques d'actionnement, principalement par une simplification de la maintenance, une amélioration des rendements et une diminution des coûts de développement et d'exploitation. En particulier, la mutation résultante des architectures énergétiques occasionne une forte émergence de l'électronique de puissance.

Dans ce contexte, la présente invention concerne plus particulièrement les systèmes de positionnement ou d'entraînement résultant de l'association d'un convertisseur continu-alternatif (onduleur) et d'un moteur triphasé synchrone à aimants permanents.

### ÉTAT DE LA TECHNIQUE ANTÉRIEURE

Bien que très en vogue, le domaine technologique de l'électronique de puissance est critique pour l'obtention d'une fiabilité suffisante pour de tels systèmes à haut degré de disponibilité. En effet, les topologies classiquement utilisées pour les onduleurs ne permettent pas le maintien du fonctionnement en présence du mode de défaillance le plus commun : le court-circuit de l'un des interrupteurs de puissance que comporte l'onduleur.

Rappelons en effet qu'un onduleur est une structure en pont qui est généralement constituée à partir d'interrupteurs de puissance à semiconducteurs tels que les IGBT, c'est-à-dire les transistors bipolaires à porte isolée (en anglais, *insulated-gate bipolar transistors*).

Afin de satisfaire les exigences de disponibilité opérationnelle, la présente invention utilise une topologie d'onduleur à tolérance de pannes, dans laquelle l'onduleur est doté de redondances structurelles.

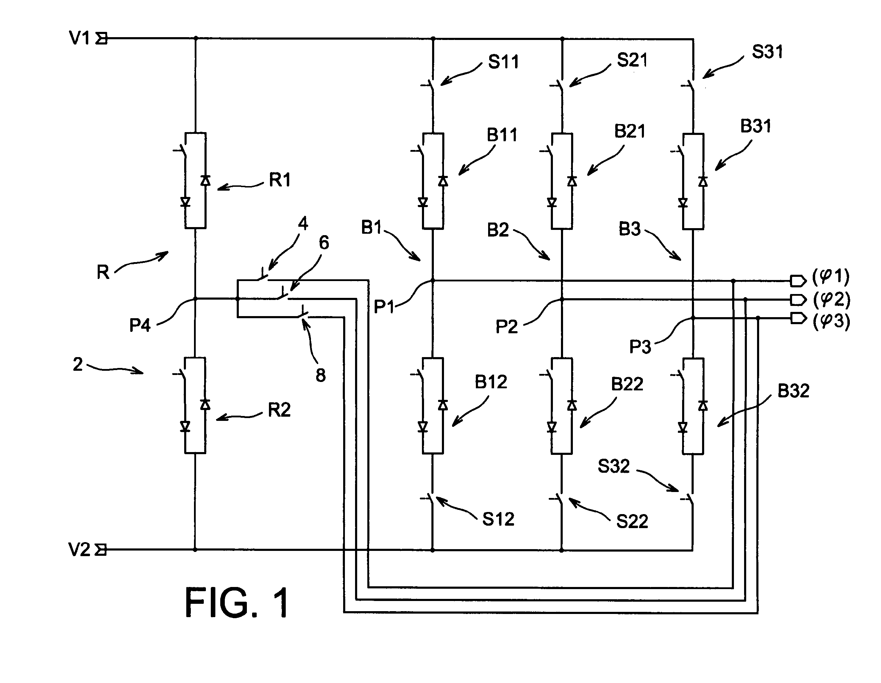

La figure 1 est une vue schématique et partielle d'un mode de réalisation particulier d'un onduleur de tension reconfigurable, à tolérance de pannes, que l'on peut utiliser dans la présente invention.

Au sujet des onduleurs de tension reconfigurables, à tolérance de pannes, on peut se reporter notamment aux documents suivantes :
[1] FR 2 892 243, « Onduleur de tension reconfigurable à tolérance de pannes », invention de Jérôme Mavier et al.,
[2] US 7 436 686, correspondant au document [1],
[3] Thèse de Jérôme Mavier, « Convertisseurs génériques à tolérance de panne, applications pour le domaine aéronautique », soutenue le 22 mars 2007.

Dans l'exemple de la figure 1, l'onduleur de tension reconfigurable, à tolérance de pannes, est destiné à alimenter un moteur triphasé synchrone à aimants permanents (non représenté). Cet onduleur comprend un ensemble de commutation 2 comprenant trois cellules de commutation B1, B2, B3, appelées « bras », et une autre cellule de commutation R qui constitue une cellule de redondance, appelée « bras redondant ».

Chacune des trois cellules de commutation B1 ou B2 ou B3, comprend deux dispositifs de commutation B11-B12 ou B21-B22 ou B31-B32 (interrupteurs de puissance à semiconducteurs) qui sont montés en série. Chacun de ces dispositifs a des première et deuxième bornes et les première bornes ont un point commmun. Les points communs correspondant aux bras B1, B2, B3 ont les références respectives P1, P2, P3. Pour alimenter le moteur, on connecte respectivement les points P1, P2, P3 aux phases ϕ1, ϕ2, ϕ3 du moteur.

Chacune des trois cellules de commutation B1, B2, B3 comprend aussi deux dispositifs d'isolement S11-S12 ou S21-S22 ou S31-S32 (interrupteurs d'isolement) ayant chacun des première et deuxième bornes. Les premières bornes sont destinées à être connectées respectivement aux deux bornes V1, V2 d'une source de tension continue (non représentée). Les deuxièmes bornes sont connectées respectivement aux deuxièmes bornes des dispositifs de commutation associés B11-B12 ou B21-B22 ou B31-B32.

La cellule de redondance R comprend deux dispositifs de commutation R1, R2 (interrupteurs de puissance à semiconducteurs) qui sont montés en série. Chacun de ces dispositifs a des première et deuxième bornes. Les premières bornes ont un point commun P4. Les deuxièmes bornes sont destinées à être respectivement connectées aux deux bornes V1, V2 de la source de tension continue.

La cellule de redondance R comprend aussi trois dispositifs de connexion 4, 6, 8 (interrupteurs de connexion) ayant chacun des première et deuxième bornes. Les premières bornes sont connectées au point commun P4 et les deuxièmes bornes sont destinées à être respectivement connectées sont trois phases ϕ1, ϕ2, ϕ3 du moteur.

Le principe de fonctionnement de l'onduleur représenté sur la figure 1 est simple : en cas de panne, le bras défaillant, à savoir B1 ou B2 ou B3 est complètement isolé par les interrupteurs associés B11-B12 ou B21-B22 ou B31-B32 et le bras redondant R vient se substituer au bras défaillant.

Cette topologie d'onduleur tolérant aux pannes nécessite un organe de gestion des redondances (non représenté sur la figure 1), appelé « superviseur ». Ce dernier est conçu pour :
- détecter une anomalie de fonctionnement de l'onduleur, anomalie qui conduit à l'arrêt du moteur alimenté par l'onduleur, qui résulte de la défaillance de l'un des trois bras B1, B2, B3, et qui induit un défaut de l'une des phases du moteur,
- isoler le bras défaillant,
- déterminer la cause de la défaillance, et
- commander une remise en marche du moteur ou une reconfiguration de l'onduleur, adaptée à l'anomalie détectée.

La réactivité de ce superviseur est cruciale pour empêcher le défaut de se propager et aussi pour corriger ce défaut le plus rapidement possible, afin que la mission d'un système contenant l'onduleur et le moteur alimenté par ce dernier ne soit pas affectée par la panne.

### EXPOSÉ DE L'INVENTION

La présente invention a justement pour objet un onduleur qui est pourvu d'un superviseur ayant une grande réactivité.

De façon précise, la présente invention a pour objet un onduleur de tension reconfigurable, à tolérance de pannes, destiné à alimenter un moteur polyphasé synchrone à aimants permanents, le nombre de phases du moteur étant égal à N, où N est un entier au moins égal à 3, l'onduleur comprenant :
- des première à N^{ième} cellules de commutation comprenant chacune :
   - deux dispositifs de commutation montés en série, et
   - deux dispositifs d'isolement,
- au moins une N+1^{ième} cellule de commutation, constituant une cellule de redondance, et
- un organe de gestion de redondance, adapté pour
   - détecter une anomalie de fonctionnement de l'onduleur, anomalie qui conduit à l'arrêt du moteur, qui résulte d'une défaillance de l'une des première à N^{ième} cellules de commutation et qui induit un défaut de l'une des N phases du moteur,
   - isoler la cellule de commutation défaillante,
   - déterminer la cause de la défaillance, et
   - commander une remise en marche du moteur ou une reconfiguration de l'onduleur, adaptée à l'anomalie détectée,
   dans lequel chaque dispositif de commutation est adapté pour informer l'organe de gestion de redondance d'un court-circuit affectant ce dispositif de commutation, et dans lequel l'organe de gestion de redondance est en outre adapté pour surveiller la valeur intégrale de la valeur absolue du courant dans la phase défectueuse.

Selon un mode de réalisation préféré de l'onduleur, objet de l'invention,
- dans les première à N^{ième} cellules de commutation, les deux dispositifs de commutation montés en série ont chacun des première et deuxième bornes, les premières bornes ayant un point commun, destiné à être connecté à l'une des N phases du moteur, et les deux dispositifs d'isolement ont chacun des première et deuxième bornes, les premières bornes étant destinées à être connectées respectivement aux deux bornes d'une source de tension continue, les deuxièmes bornes étant connectées respectivement aux deuxièmes bornes des dispositifs de commutation associés.

Dans ce cas la N+1^{ième} cellule de commutation constituant une cellule de redondance, comprend de préférence :
- deux dispositifs de commutation montés en série, ayant chacun des première et deuxième bornes, les premières bornes ayant un point commun, les deuxièmes bornes étant destinées à être respectivement connectées aux deux bornes de la source de tension continue, et
- N dispositifs de connexion ayant chacun des première et deuxième bornes, les premières bornes étant connectées au point commun correspondant à la N+1^{ième} cellule de commutation, chacune des deuxièmes bornes étant destinée à être connectée à l'une des N phases du moteur.

De préférence, l'organe de gestion de redondance est en outre adapté pour comparer la valeur intégrale surveillée à un seuil prédéfini.

Selon un mode de réalisation préféré de l'invention, l'organe de gestion de redondance est en outre adapté pour commander l'isolation électrique de l'une des N-1 phases du moteur, qui est exempte de défaut, dès la détection du défaut.

Dans ce cas, de préférence, l'organe de gestion de redondance est en outre adapté pour commander l'ouverture de la première des N-1 phases exemptes de défaut, dont le courant passe par zéro.

Selon un mode de réalisation particulier de l'invention, l'organe de gestion de redondance est en outre adapté pour commander la reconfiguration de l'onduleur dès qu'un nombre prédéfini de remises en marche du moteur est atteint.

La présente invention concerne aussi un ensemble onduleur-moteur polyphasé synchrone à aimants permanents, tolérant aux pannes, comprenant :
- l'onduleur, objet de l'invention, et
- un moteur polyphasé synchrone à aimants permanents, alimenté par l'onduleur.

L'invention concerne aussi un procédé de gestion de redondance dans un onduleur de tension reconfigurable, à tolérance de pannes, destiné à alimenter un moteur polyphasé synchrone à aimants permanents, le nombre de phases du moteur étant égal à N, où N est un entier au moins égal à 3, l'onduleur comprenant :
- des première à N^{ième} cellules de commutation comprenant chacune :
   - deux dispositifs de commutation (B11-B12, B21-B22, B31-B32) montés en série, et
   - deux dispositifs d'isolement,
- au moins une N+1^{ième} cellule de commutation, constituant une cellule de redondance, et
- un organe de gestion de redondance,
   dans lequel
   - on détecte une anomalie de fonctionnement de l'onduleur, anomalie qui conduit à l'arrêt du moteur, qui résulte d'une défaillance de l'une des première à N^{ième} cellules de commutation et qui induit un défaut de l'une des N phases du moteur,
   - on isole la cellule de commutation défaillante,
   - on détermine la cause de la défaillance, et
   - on commande une remise en marche du moteur ou une reconfiguration de l'onduleur, adaptée à l'anomalie détectée,
dans lequel chaque dispositif de commutation informe l'organe de gestion de redondance d'un court-circuit affectant ce dispositif de commutation, et dans lequel l'organe de gestion de redondance surveille la valeur intégrale de la valeur absolue du courant dans la phase défectueuse.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue schématique et partielle d'un mode de réalisation particulier d'un onduleur de tension reconfigurable, à tolérance de pannes, que l'on peut utiliser dans la présente invention, et a déjà été décrite,
- la figure 2 est une vue schématique d'un mode de réalisation particulier de l'onduleur reconfigurable, à tolérance de pannes, objet de l'invention, et
- la figure 3 est une illustration temporelle du procédé qui est mis en oeuvre dans l'invention.

### EXPOSÉ DÉTAILLÉ DE MODES DE RÉALISATION PARTICULIERS

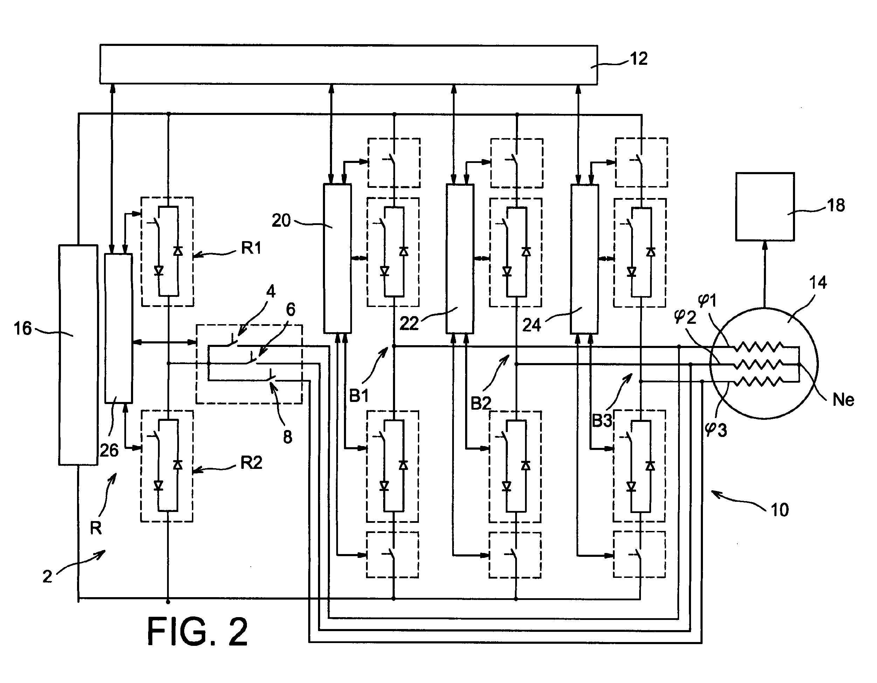

La figure 2 est une vue schématique d'un mode de réalisation particulier de l'onduleur de tension, objet de l'invention. L'onduleur de tension 10 représenté sur la figure 2 comprend :
- l'ensemble de commutation 2 que l'on a décrit en faisant référence à la figure 1, et
- un organe de gestion de redondance 12, également appelé « superviseur ».

L'onduleur 10 alimente un moteur triphasé synchrone à aimants permanents 14 et il est lui-même alimenté par une source de tension continue 16.

A titre purement indicatif et nullement limitatif, le moteur 14 est destiné à commander un actionneur 18, par exemple une servo-gouverne d'un engin spatial.

Le superviseur est conçu pour détecter et corriger les deux types de pannes qui peuvent affecter l'un des interrupteurs de puissance que comportent les cellules B1, B2 et B3 de l'onduleur : une panne de type court-circuit ou une panne de type circuit ouvert. Le mode de défaillance le plus critique est le court-circuit. C'est malheureusement aussi le plus fréquent. Dans ce qui suit, on va considérer ce cas du court-circuit. Et l'on va expliquer comment le superviseur 12 gère une panne de type interrupteur court-circuité.

Quand un interrupteur de puissance est court-circuité, il est traversé par un courant très important (de l'ordre de cinq fois le courant nominal par exemple), sort de sa zone de fonctionnement linéaire et entre dans sa zone de désaturation.

On précise que chaque cellule de commutation B1 ou B2 ou B3 de l'onduleur 10 est pourvue d'un circuit-pilote (en anglais, *driver*) 20 ou 22 ou 24 constituant un dispositif de commande rapprochée et de surveillance de cette cellule de commutation et des dispositifs d'isolement associés à cette cellule. La cellule de commutation R est, quant à elle, pourvue d'un circuit-pilote 26 constituant un dispositif de commande rapprochée et de surveillance de cette cellule de commutation et des dispositifs de connexion 4, 6, 8.

Les circuits-pilotes 20, 22, 24 et 26 communiquent avec le superviseur 12. A ce sujet, on se reportera notamment aux documents [1] (ou [2]) et [3].

Lorsque l'un des interrupteurs de puissance sort de la zone de fonctionnement linéaire, le circuit-pilote auquel il correspond est capable de détecter cette sortie du fonctionnement linéaire et d'envoyer un signal d'avertissement (en anglais, *flag*) au superviseur 12. Ce dernier commande alors le plus rapidement possible un blocage de l'interrupteur et de son complémentaire, c'est-à-dire le deuxième interrupteur du bras comportant l'interrupteur court-circuité.

On admet dans ce qui suit qu'une panne est toujours suivie de l'envoi de ce signal d'avertissement, qui permet le lancement de la procédure de gestion de la panne par le superviseur.

Afin de limiter les forts courants du régime de défaut considéré, une commande de blocage, ou commande d'inhibition, de l'onduleur est envoyée par le superviseur 12 dès réception d'un signal d'avertissement par ce superviseur. Cela signifie que l'on demande l'ouverture (ou l'inhibition), le plus rapidement possible, des six interrupteurs de commutation des bras B1, B2 et B3 de l'onduleur.

Ce dernier se trouve alors dans l'une des deux configurations suivantes : soit l'onduleur est effectivement bloqué, soit l'un des six interrupteurs est encore en court-circuit.

Si l'onduleur est effectivement bloqué, cela signifie que le circuit-pilote a pu obtenir l'ouverture de chacun des interrupteurs : les six interrupteurs sont ouverts. L'envoi du signal d'avertissement se révèle être une « fausse panne » puisque l'interrupteur ayant causé l'envoi du signal est toujours commandable.

Il s'ensuit une annulation effective des courants, y compris dans la phase censée être défectueuse (parmi les phases ϕ1, ϕ2 et ϕ3 du moteur 14). Après cette fausse panne, on peut effectuer un redémarrage du moteur 14 avec la même configuration, puisque la cellule n'est pas réellement défaillante : le court-circuit pouvait venir d'un défaut de commande.

Cependant, ce défaut peut se répéter et peut venir perturber le bon fonctionnement de l'actionneur 18 qui est commandé par le moteur 14.

Pour éviter cela, l'utilisateur peut mémoriser un nombre maximum de redémarrages dans le superviseur 12 et configurer ce dernier de telle sorte que, lorsque ce nombre est atteint, le superviseur reconfigure l'onduleur, que la panne soit « fausse » ou « réelle ».

Si l'un des six interrupteurs est encore en court-circuit, cela signifie que la procédure interne du circuit pilote n'a pas fonctionné. On précise que cette procédure interne consiste à ouvrir (ou inhiber) automatiquement l'interrupteur (procédure très localisée).

Il s'agit alors du véritable mode critique qu'il faut diagnostiquer le plus rapidement possible. Le diagnostic peut être établi par le superviseur 12 en observant le courant dans la phase défectueuse, courant qui est censé s'annuler durablement (après le blocage de l'onduleur), alors que dans ce cas de panne, ce courant devient incontrôlable et peut atteindre de fortes valeurs (supérieures au courant nominal).

L'observation du courant dans la phase défectueuse peut être faite au moyen des capteurs de courants des phases qui sont nécessaires au fonctionnement nominal.

Une fois le diagnostic correctement établi, il faut que le superviseur commande l'isolement du bras défaillant, contrôle que cet isolement a bien eu lieu et enfin reconfigure l'onduleur à l'aide du bras redondant R.

Ce processus pose deux problèmes importants :
1) Pour le superviseur, il faut traduire le fait qu'un courant « s'annule durablement ». Cet élément est nécessaire au diagnostic, mais très difficile à traduire de façon quantitative pour les raisons suivantes :
   a) Au début du blocage, les moyennes instantanées des courants sont non nulles. Donc le test ne peut avoir lieu à ce moment-là. Il est très difficile d'évaluer au bout de combien de temps un diagnostic devient valide.
   b) A cause du bruit des capteurs de courant, qui sont placés à proximité des cellules de commutation B1, B2, B3, et prévus pour le fonctionnement nominal, on ne peut pas espérer réaliser un test d'annulation qui soit simple ; sinon, il faut calibrer des marges autour de zéro, marges qui peuvent fausser le diagnostic dans certains cas.
   c) Le mot « durablement » pose un problème : la durée du diagnostic doit être la plus courte possible, mais doit être également suffisamment longue pour avoir un degré de confiance élevé.
2) Une fois le diagnostic établi et la décision de reconfigurer l'onduleur prise, il faut pouvoir isoler la phase en défaut à l'aide des interrupteurs de sectionnement correspondants (à titre d'exemple, il s'agit des interrupteurs S11 et S12 si la phase ϕ1 est défectueuse). Or, ces interrupteurs n'ont aucun pouvoir de coupure. Autrement dit, ils ne peuvent s'ouvrir que lorsque le courant qui les traverse est nul. Or, en position « onduleur bloqué », rien ne garantit le passage par zéro des courants dans la phase en défaut. Ceci est dû aux aimants permanents du moteur qui peuvent entretenir le régime de défaut.

La présente invention vise à résoudre ces deux problèmes.

Dans l'invention, pour apprécier si le courant dans la phase en défaut « s'annule durablement », on surveille la valeur intégrale de la valeur absolue du courant dans la phase en défaut. Cela permet de filtrer non seulement le régime transitoire du début du diagnostic lors du blocage de l'onduleur, mais aussi les bruits de mesure du courant.

De plus, il est avantageux de comparer cette valeur intégrale à un seuil prédéfini. Cela permet de réaliser un diagnostic rapide, sans « fenêtre glissante » de surveillance et sans avoir à déterminer une date précise de diagnostic. Sinon, cette date de diagnostic devrait être plusieurs fois confirmée, afin d'avoir un niveau de confiance élevé dans la décision.

Autrement dit, grâce à la notion d'intégrale, le diagnostic n'est pas dépendant d'un instant de décision, ce qui évite d'avoir à fixer des marges de tolérance rédhibitoires.

On explique ci-après comment on surveille la valeur intégrale de la valeur absolue du courant dans la phase en défaut.

Les valeurs instantanées des courants de phase sont disponibles dans les moyens électroniques de commande qui assurent le pilotage de l'onduleur car ces valeurs sont nécessaires au pilotage de l'onduleur.

De plus, réaliser l'intégrale d'une valeur absolue est une opération calculatoire qui est aisément implémentable dans le superviseur 12.

En outre, dans l'invention, pour être sûr que le courant dans la phase en défaut va s'annuler, on commande l'isolation d'une phase saine, dès la détection du défaut. Dès la demande de blocage de l'onduleur et avant même d'avoir terminé le diagnostic, on ouvre, grâce aux interrupteurs d'isolement, la première phase saine dont le courant passe par zéro. La loi des noeuds sur le point neutre Ne du moteur 14 et les variations des forces contre-électromotrices du moteur assurent alors le passage par zéro des courants dans les deux phases restantes, et ce de façon très rapide (moins d'un tour mécanique du moteur). D'ici là le diagnostic aura eu le temps d'être réalisé et cet instant où les courants s'annulent permettra l'isolation de la phase en défaut, puis la reconfiguration et le redémarrage du système.

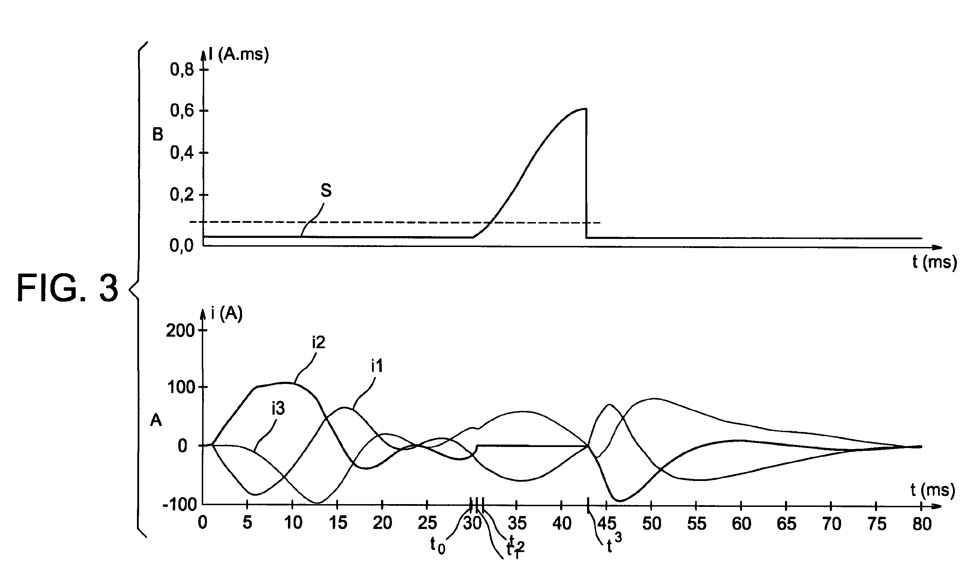

Une illustration temporelle du procédé mis en oeuvre dans l'exemple de l'invention, que l'on a décrit, est donnée par la figure 3.

Sur cette figure 3, le temps t est compté en abscisse et exprimé en millisecondes. Dans la partie A de la figure 3, les intensités i des courants considérés sont portées en ordonnée et exprimées en ampères.

Sur cette partie A, on a représenté les trois courants il, i2, i3 qui sont fournis par l'onduleur de la figure 2 et qui circulent dans les connexions du moteur 14. On suppose qu'un court-circuit apparaît dans le bras B1 de l'onduleur, à un instant tₒ=30 ms après l'instant choisi comme origine sur la figure 3.

La partie B de la figure 3 représente les variations I (en A.ms) de la valeur intégrale de la valeur absolue du courant dans la phase en défaut (ϕ1 dans l'exemple) en fonction du temps t. La ligne en pointillés S correspond au seuil prédéfini, mentionné plus haut.

L'instant tₒ+500 ns (environ) correspond à l'instant en lequel le circuit-pilote est alerté de l'apparition du court-circuit dans le bras B1 de l'onduleur et en lequel l'onduleur est bloqué.

L'instant t1 peu différent de 31 ms correspond à l'annulation du courant (i2 dans l'exemple représenté) dans l'une des deux phases saines, et à l'isolement de cette phase.

L'instant t2 peu différent de 32 ms correspond à l'instant en lequel l'intégrale I dépasse la valeur du seuil S.

L'instant t3 peu différent de 43 ms correspond à l'instant en lequel le courant dans la phase défaillante s'annule, cette phase est isolée, et la connexion des bras sains B2, B3 et du bras redondant R a lieu.

On mentionne dans ce qui suit des avantages de la présente invention :
1) Le procédé utilisé dans l'invention permet l'isolation du défaut (ce défaut ne se propage pas), le diagnostic, la reconfiguration et enfin la remise en fonctionnement du système formé par l'onduleur et le moteur.
2) Le procédé fonctionne en temps réel sur le système, ce qui implique une excellente réactivité et permet, par exemple, une poursuite quasiment sans interruption de la mission d'un engin spatial comportant un tel système ; en effet, la procédure dure typiquement entre 5 ms et 50 ms pour des applications aux servogouvernes spatiales.
3) Le principe du procédé est très simple. Il ne nécessite ni d'importantes ressources informatiques, ni d'outils mathématiques complexes.
4) Il conduit à une augmentation significative de la fiabilité d'un convertisseur de courant continu en courant alternatif triphasé, destiné à alimenter une machine synchrone à aimants permanents : le taux de pannes horaire est environ divisé par 100.
5) Parmi toutes les solutions proposées pour améliorer la fiabilité des onduleurs triphasés, l'invention présente l'un des meilleurs compromis surcoût/performances.
6) Contrairement à beaucoup d'autres solutions connues pour résoudre ce problème, avec l'invention le régime de fonctionnement après reconfiguration est identique au régime initial. Autrement dit, le régime de secours n'est pas « dégradé ».
7) Les exemples que l'on a donné de l'invention peuvent être étendus à volonté pour être tolérant au nombre de pannes souhaité. Le procédé est inchangé : il suffit d'ajouter d'autres bras redondants, montés en parallèle avec le bras R de la figure 2.
8) Le processus exposé est « transparent » pour toutes les boucles d'asservissement que comportent les lois de pilotage de l'ensemble convertisseur-moteur. On entend par là que ce procédé n'impose aucune modification de ces lois de pilotage.
9) Le processus exposé n'implique ni un surdimensionnement, ni une modification de conception du moteur. Par exemple, beaucoup de processus connus dans ce domaine nécessitent l'accès physique au point neutre Ne du moteur, ce qui n'est pas le cas dans l'invention.
10) Ce processus ne nécessite aucun capteur physique supplémentaire, propre à sa mise en oeuvre : ce processus utilise simplement des capteurs qui font classiquement partie des ensembles connus onduleur-moteur triphasé synchrone à aimants permanents, à savoir les capteurs de courant des phases du moteur et le capteur de position du moteur.
11) La reconfiguration de l'onduleur est réversible : la présente invention n'utilise aucun élément à usage unique tel qu'un fusible. Cela permet de vérifier que la redondance est opérationnelle lors de tests fonctionnels.

Afin de faciliter les opérations de maintenance, l'ensemble onduleur-moteur est avantageusement prévu pour fournir automatiquement des informations sur son état : ainsi, aucun diagnostic n'est à prévoir de la part d'un opérateur pour savoir si la redondance a été consommée. Afin de fournir ces informations, le superviseur est muni d'une mémoire logicielle qu'il peut partager avec d'autres logiciels qui sont responsables de la maintenance.

Dans les exemples de l'invention qui ont été donnés en faisant référence aux figures 2 et 3, le moteur est triphasé. Mais il pourrait y avoir plus de trois phases, par exemple dans le cas d'applications nécessitant beaucoup de puissance : la présente invention s'applique plus généralement au cas où le moteur comporte N phases, où N est supérieur à 3. L'homme du métier peut adapter les exemples donnés plus haut à un tel cas : au lieu de prévoir trois cellules en parallèle, on en prévoit N ; et au lieu de prévoir trois interrupteurs dans chaque cellule de redondance (interrupteurs 4, 6, 8 sur les figures 1 et 2), on en prévoit N.

## Revendications

1. Onduleur de tension reconfigurable (10), à tolérance de pannes, destiné à alimenter un moteur polyphasé synchrone à aimants permanents (14), le nombre de phases du moteur étant à N, où N est un entier au moins égal à 3, l'onduleur comprenant :
- des première à N^{ième} cellules de commutation (B1, B2, B3) comprenant chacune :
• deux dispositifs de commutation (B11-B12, B21-B22, B31-B32) montés en série, et
• deux dispositifs d'isolement (S11-S12, S21-S22, S31-S32),
- au moins une N+1^{ième} cellule de commutation (R), constituant une cellule de redondance, et
- un organe de gestion de redondance (12), adapté pour
• détecter une anomalie de fonctionnement de l'onduleur, anomalie qui conduit à l'arrêt du moteur, qui résulte d'une défaillance de l'une des première à N^{ième} cellules de commutation et qui induit un défaut de l'une des N phases du moteur,
• isoler la cellule de commutation défaillante,
• déterminer la cause de la défaillance, et
• commander une remise en marche du moteur ou une reconfiguration de l'onduleur, adaptée à l'anomalie détectée,
dans lequel chaque dispositif de commutation est adapté pour informer l'organe de gestion de redondance (12) d'un court-circuit affectant ce dispositif de commutation, et dans lequel l'organe de gestion de redondance est en outre adapté pour surveiller la valeur intégrale (I) de la valeur absolue du courant dans la phase défectueuse.

2. Onduleur selon la revendication 1, dans lequel dans les première à N^{ième} cellules de commutation, les deux dispositifs de commutation montés en série ont chacun des première et deuxième bornes, les premières bornes ayant un point commun (P1, P2, P3), destiné à être connecté à l'une des N phases du moteur (14), et les deux dispositifs d'isolement ont chacun des première et deuxième bornes, les premières bornes étant destinées à être connectées respectivement aux deux bornes d'une source de tension continue (16), les deuxièmes bornes étant connectées respectivement aux deuxièmes bornes des dispositifs de commutation associés.

3. Onduleur selon la revendication 2, dans lequel la N+1^{ième} cellule de commutation (R), constituant une cellule de redondance, comprend :
• deux dispositifs de commutation (R1, R2) montés en série, ayant chacun des première et deuxième bornes, les premières bornes ayant un point commun (P4), les deuxièmes bornes étant destinées à être respectivement connectées aux deux bornes de la source de tension continue (16), et
• N dispositifs de connexion ayant chacun des première et deuxième bornes, les premières bornes étant connectées au point commun (P4) correspondant à la N+1^{ième} cellule de commutation, chacune des deuxièmes bornes étant destinée à être connectée à l'une des N phases du moteur (14).

4. Onduleur selon l'une quelconque des revendications 1 à 3, dans lequel l'organe de gestion de redondance (12) est en outre adapté pour comparer la valeur intégrale surveillée (I) à un seuil prédéfini (S) .

5. Onduleur selon l'une quelconque des revendications 1 à 4, dans lequel l'organe de gestion de redondance (12) est en outre adapté pour commander l'isolation électrique de l'une des N-1 phases du moteur, qui est exempte de défaut, dès la détection du défaut.

6. Onduleur selon la revendication 5, dans lequel l'organe de gestion de redondance (12) est en outre adapté pour commander l'ouverture de la première des N-1 phases exemptes de défaut, dont le courant passe par zéro.

7. Onduleur selon l'une quelconque des revendications 1 à 6, dans lequel l'organe de gestion de redondance (12) est en outre adapté pour commander la reconfiguration de l'onduleur (10) dès qu'un nombre prédéfini de remises en marche du moteur (14) est atteint.

8. Ensemble onduleur-moteur polyphasé synchrone à aimants permanents, tolérant aux pannes, comprenant :
- l'onduleur (10) selon l'une quelconque des revendications 1 à 7, et
- un moteur polyphasé synchrone à aimants permanents (14), alimenté par l'onduleur.

9. Procédé de gestion de redondance dans un ondulteur de tension reconfigurable (10), à tolérance de pannes, destiné à alimenter un moteur polyphasé synchrone à aimants permanents (14), le nombre de phases du moteur étant égal à N, où N est un entier au moins égal à 3, l'onduleur comprenant :
- des première à N^{ième} cellules de commutation (B1, B2, B3) comprenant.chacune :
• deux dispositifs de commutation (B11-B12, B21-B22, B31-B32) montés en série, et
• deux dispositifs d'isolement (S11-S12, S21-S22, S31-S32),
- au moins une N+1^{ième} cellule de commutation (R), constituant une cellule de redondance, et
- un organe de gestion de redondance (12), dans lequel
• on détecte une anomalie de fonctionnement de l'onduleur, anomalie qui conduit à l'arrêt du moteur, qui résulte d'une défaillance de l'une des première à N^{ième} cellules de commutation et qui induit un défaut de l'une des N phases du moteur,
• on isole la cellule de commutation défaillante,
• on détermine la cause de la défaillance, et
• on commande une remise en marche du moteur ou une reconfiguration de l'onduleur, adaptée à l'anomalie détectée,
dans lequel chaque dispositif de commutation informe l'organe de gestion de redondance (12) d'un court-circuit affectant ce dispositif de commutation, et dans lequel l'organe de gestion de redondance surveille la valeur intégrale (I) de la valeur absolue du courant dans la phase défectueuse.

## Patentansprüche

1. Rekonfigurierbarer Spannungswechselrichter (10) mit Fehlertoleranz, der dazu ausgelegt ist, einen mehrphasigen Synchronmotor mit Permanentmagneten (14) zu versorgen, wobei die Zahl der Phasen des Motors N ist, wobei N eine ganze Zahl wenigstens gleich 3 ist, wobei der Wechselrichter umfaßt:
- eine erste bis eine N-te Schaltzelle (B1, B2, B3), die jeweils umfassen:
• zwei Schaltvorrichtungen (B11-B12, B21-B22, B31-B32), die in Reihe montiert sind, und
• zwei Isoliervorrichtungen (S11-S12, S21-S22, S31-S32),
- wenigstens eine N + 1-te Schaltzelle (R), die eine Redundanzzelle bildet, und
- ein Redundanzverwaltungsorgan (12), das für folgendes ausgelegt ist:
• Erfassen einer Funktionsanomalie des Wechselrichters, welche Anomalie zum Halt des Motors führt, die aus einem Ausfall von einer der ersten bis N-ten Schaltzelle resultiert und einen Fehler einer der N Phasen des Motors induziert,
• Isolieren der ausgefallenen Schaltzelle,
• Bestimmen des Grunds des Ausfalls, und
• Steuern einer Wiederinbetriebnahme des Motors oder einer Rekonfiguration des Wechselrichters, die an die erfaßte Anomalie angepaßt ist,
wobei jede Schaltvorrichtung dazu ausgelegt ist, das Redundanzverwaltungsorgan (12) über einen Kurzschluß zu informieren, der diese Schaltvorrichtung betrifft, und wobei das Redundanzverwaltungsorgan ferner dazu ausgelegt ist, den Integralwert (I) des Absolutwerts des Stroms in der fehlerhaften Phase zu überwachen.

2. Wechselrichter nach Anspruch 1, bei dem in der ersten bis N-ten Schaltzelle die zwei in Reihe montierten Schaltvorrichtungen jeweils einen ersten und einen zweiten Anschluß haben, wobei die ersten Anschlüsse einen gemeinsamen Punkt (P1, P2, P3) haben, der dazu ausgelegt ist, an eine der N Phasen des Motors (14) angeschlossen zu sein, und wobei die zwei Isoliervorrichtungen jeweils einen ersten und einen zweiten Anschluß haben, wobei die ersten Anschlüsse dazu ausgelegt sind, jeweils an die zwei Anschlüsse einer Gleichspannungsquelle (16) angeschlossen zu sein, wobei die zweiten Anschlüsse jeweils an die zweiten Anschlüsse der zugeordneten Schaltvorrichtungen angeschlossen sind.

3. Wechselrichter nach Anspruch 2, bei dem die N + 1-te Schaltzelle (R), die eine Redundanzzelle bildet, umfaßt:
• zwei in Reihe montierte Schaltvorrichtungen (R1, R2), die jeweils einen ersten und einen zweiten Anschluß haben, wobei die ersten Anschlüsse einen gemeinsamen Punkt (P4) haben, wobei die zweiten Anschlüsse dazu ausgelegt sind, jeweils an die zwei Anschlüsse der Gleichspannungsquelle (16) angeschlossen zu sein, und
• N Anschlußvorrichtungen, die jeweils einen ersten und einen zweiten Anschluß haben, wobei die ersten Anschlüsse an den gemeinsamen Punkt (P4) entsprechend der N + 1-ten Schaltzelle angeschlossen sind, wobei jeder der zweiten Anschlüsse dazu ausgelegt ist, an eine der N Phasen des Motors (14) angeschlossen zu sein.

4. Wechselrichter nach einem der Ansprüche 1 bis 3, bei dem das Redundanzverwaltungsorgan (12) ferner dazu ausgelegt ist, den überwachten Integralwert (I) mit einer zuvor definierten Schwelle (S) zu vergleichen.

5. Wechselrichter nach einem der Ansprüche 1 bis 4, bei dem das Redundanzverwaltungsorgan (12) ferner dazu ausgelegt ist, ab der Erfassung des Fehlers die elektrische Isolierung einer der N - 1 Phasen des Motors, die fehlerfrei ist, zu steuern.

6. Wechselrichter nach Anspruch 5, bei dem das Redundanzverwaltungsorgan (12) ferner dazu ausgelegt ist, das Öffnen der ersten der fehlerfreien N - 1 Phasen zu steuern, deren Strom durch Null durchgeht.

7. Wechselrichter nach einem der Ansprüche 1 bis 6, bei dem das Redundanzverwaltungsorgan (12) ferner dazu ausgelegt ist, die Rekonfiguration des Wechselrichters (10) zu steuern, sobald eine zuvor definierte Zahl von Wiederinbetriebnahmen des Motors (14) erreicht ist.

8. Fehlertolerante Anordnung aus einem Wechselrichter und einem mehrphasigen Synchronmotor mit Permanentmagneten, umfassend:
- den Wechselrichter (10) nach einem der Ansprüche 1 bis 7, und
- einen mehrphasigen Synchronmotor mit Permanentmagneten (14), der durch den Wechselrichter versorgt wird.

9. Verfahren zur Redundanzverwaltung in einem rekonfigurierbaren Spannungswechselrichter (10) mit Fehlertoleranz, der dazu ausgelegt ist, einen mehrphasigen Synchronmotor mit Permanentmagneten (14) zu versorgen, wobei die Zahl der Phasen des Motors gleich N ist, wobei N eine ganze Zahl wenigstens gleich 3 ist, wobei der Wechselrichter umfaßt:
- eine erste bis eine N-te Schaltzelle (B1, B2, B3), die jeweils umfassen:
• zwei Schaltvorrichtungen (B11-B12, B21-B22, B31-B32), die in Reihe montiert sind, und
• zwei Isoliervorrichtungen (S11-S12, S21-S22, S31-S32),
- wenigstens eine N + 1-te Schaltzelle (R), die eine Redundanzzelle bildet, und
- ein Redundanzverwaltungsorgan (12), wobei
• man eine Funktionsanomalie des Wechselrichters erfaßt, welche Anomalie zum Halt des Motors führt, die aus einem Ausfall einer der ersten bis N-ten Schaltzelle resultiert und einen Fehler bei einer der N Phasen des Motors induziert,
• man die ausgefallene Schaltzelle isoliert,
• man den Grund des Ausfalls bestimmt, und
• man eine Wiederinbetriebnahme des Motors oder eine Rekonfiguration des Wechselrichters steuert, die an die erfaßte Anomalie angepaßt ist,
wobei jede Schaltvorrichtung das Redundanzverwaltungsorgan (12) über einen Kurzschluß informiert, der diese Schaltvorrichtung betrifft, und wobei das Redundanzverwaltungsorgan den Integralwert (I) des Absolutwerts des Stroms in der fehlerhaften Phase überwacht.

## Claims

1. A reconfigurable fault-tolerant voltage inverter (10), intended to power a multi-phase synchronous permanent-magnet motor (14), where the number of phases of the motor is equal to N, where N is an integer which is at least equal to 3, and where the inverter includes:
- first to N^{th} switching cells (B1, B2, B3), where each includes:
• two switching devices (B11-B12, B21-B22, B31-B32) assembled in series, and
• two isolating devices (S11-S12, S21-S22, S31-S32),
- at least one N+1^{th} switching cell (R), constituting a redundancy cell, and
- a redundancy-management device (12), adapted to
• detect an operating anomaly of the inverter, leading to a stoppage of the motor, which results from a failure of one of the first to N^{th} switching cells, and which causes a fault of one of the N phases of the motor,
• isolate the defective switching cell,
• determine the cause of the failure, and
• order a restart of the motor or a reconfiguration of the inverter, appropriate for the detected anomaly,
in which each switching device is adapted to inform the redundancy-management device (12) of a short circuit affecting this switching device, and in which the redundancy-management device is also adapted to supervise the integral value (I) of the absolute value of the current in the defective phase.

2. An inverter according to claim 1, in which in the first to N^{th} switching cells the two switching devices assembled in series each have first and second terminals, where the first terminals have a common point (P1, P2, P3), intended to be connected to one of the N phases of the motor (14), and the two isolating devices each have first and second terminals, where the first terminals are intended to be connected respectively to the two terminals of a direct voltage source (16), and where the second terminals are connected respectively to the two terminals of the associated switching devices.

3. An inverter according to claim 2, in which the N+1^{th} switching cell (R), constituting a redundancy cell, includes:
• two switching devices (R1, R2) assembled in series, where each has first and second terminals, where the first terminals have a common point (P4), where the second terminals are intended to be respectively connected to the two terminals of the direct voltage source (16), and
• N connection devices each having first and second terminals, where the first terminals are connected to the common point (P4) corresponding to the N+1^{th} switching cell, where each of the two terminals is intended to be connected to one of the N phases of the motor (14).

4. An inverter according to any of the claims 1 to 3, in which the redundancy-management device (12) is also adapted to compare the supervised integral value (I) with a predetermined threshold (S).

5. An inverter according to any of the claims 1 to 4, in which the redundancy-management device (12) is moreover adapted to order the electrical isolation of one of the N-1 phases of the motor, which has no fault, as soon as the fault is detected.

6. An inverter according to claim 5, in which the redundancy management device (12) is also adapted to order the opening of the first of the N-1 fault-free phases, the current of which passes through zero.

7. An inverter according to any of the claims 1 to 6, in which the redundancy-management device (12) is also adapted to order the reconfiguration of the inverter (10) as soon as a predetermined number of restarts of the motor (14) is reached.

8. A multiphase synchronous permanent-magnet fault-tolerant inverter-motor assembly including:
- the inverter (10) according to any of the claims 1 to 7, and
- a multi-phase synchronous permanent-magnet motor (14), powered by the inverter.

9. A redundancy management method in a reconfigurable fault-tolerant voltage inverter (10), intended to power a multi-phase synchronous permanent-magnet motor (14), where the number of phases of the motor is equal to N, where N is an integer which is at least equal to 3, and where the inverter includes:
- first to N^{th} switching cells (B1, B2, B3), where each includes:
• two switching devices (B11-B12, B21-B22, B31-B32) assembled in series, and
• two isolating devices (S11-S12, S21-S22, S31-S32),
- at least one N+1^{th} switching cell (R), constituting a redundancy cell, and
- a redundancy-management device (12), in which
• an operating anomaly of the inverter is detected, leading to a stoppage of the motor, which results from a failure of one of the first to N^{th} switching cells, and which causes a fault of one of the N phases of the motor,
• the defective switching cell is isolated,
• the cause of the failure is determined, and
• a restart of the motor or a reconfiguration of the inverter, appropriate for the detected anomaly, is ordered,
in which each switching device informs the redundancy-management device (12) of a short circuit affecting this switching device, and in which the redundancy-management device supervises the integral value (I) of the absolute value of the current in the defective phase.
